# FASCICULE DE BREVET EUROPEEN

(11) **EP 2 376 992 B1**
(45) Date de publication et mention de la délivrance du brevet: **02.07.2014**
(21) Numéro de dépôt: 09805772.2
(22) Date de dépôt: 21.12.2009
(51) Int. Cl.: G05D 23/13

(54) **CARTOUCHE THERMOSTATIQUE MONOCOMMANDE ET ROBINET MITIGEUR COMPORTANT UNE TELLE CARTOUCHE**
THERMOELEKTRISCHE EINFACHSTEUERUNGSKASSETTE UND MISCHHAHN MIT EINER SOLCHEN KASSETTE
SINGLE-CONTROL THERMOSTATIC CARTRIDGE AND MIXER FAUCET INCLUDING SUCH A CARTRIDGE

(30) Priorité: 22.12.2008 FR 0858953
(43) Date de publication de la demande: 19.10.2011
(73) Titulaire: Vernet, 91340 Ollainville (FR)
(72) Inventeur: PLATET, Emmanuel, 91510 Lardy (FR); DA SILVA, William, 91340 Ollainville (FR)
(74) Mandataire: Grand, Guillaume
(86) Numéro de dépôt international: PCT/FR2009/052649
(87) Numéro de publication internationale: WO 2010/072966

(56) Documents cités:
- EP-A- 1 048 997
- EP-A- 1 376 292
- WO-A-96/26475
- FR-A- 2 586 784
- US-A- 4 407 444

## Description

La présente invention concerne une cartouche thermostatique monocommande, ainsi qu'un robinet mitigeur comportant une telle cartouche.

Actuellement, de nombreux éviers, lavabos et douches sont équipés de robinets mitigeurs à l'intérieur desquels sont agencés une cartouche à disques en céramique. En manipulant une poignée, l'utilisateur commande la position relative des disques de sorte qu'une quantité d'eau froide alimentant le robinet et une quantité d'eau chaude alimentant également ce robinet se mélangent avant de sortir du robinet. De cette façon, l'utilisateur règle approximativement le débit et la température du mélange entre l'eau froide et l'eau chaude.

Toutefois, quand la pression et/ou la température de l'un des fluides entrant(s) varient de manière importante ou brusque, les cartouches de ce type sont incapables de stabiliser efficacement la température du fluide de sortie. WO-A-96/26475 a donc proposé d'intégrer à ce genre de cartouche un élément thermostatique. Pour ce faire, deux disques en céramique sont superposés : le disque inférieur est traversé par deux entrées, respectivement de fluide froid et de fluide chaud, et par deux retours, respectivement de fluide froid et de fluide chaud, tandis que le disque supérieur est agencé de manière mobile, par rapport au disque inférieur, à la fois en rotation autour d'un axe central de la cartouche et en translation radialement à cet axe, de manière que, selon la position du disque supérieur, un passage de fluide froid et un passage de fluide chaud, délimité dans ce disque supérieur, mettent respectivement en communication l'entrée avec le retour de fluide froid et l'entrée avec le retour de fluide chaud du disque inférieur. Au moyen d'un unique levier de commande, l'utilisateur règle le débit et la température du mélange de l'eau froide et de l'eau chaude, en entraînant en rotation et en translation le disque supérieur, tout en déplaçant un élément thermostatique qui est relié mécaniquement à un tiroir de régulation situé en aval du disque inférieur. La cartouche obtenue est ainsi qualifiée de « thermostatique monocommande ».

Cependant, la géométrie de cette cartouche, en particulier la disposition relative des entrées et retours des fluides froid et chaud, limite à la fois le diamètre disponible pour le tiroir de régulation et les sections d'écoulement des fluides à travers la cartouche. Les débits des fluides à mélanger étant faibles, il en résulte un écoulement faible autour de l'élément thermostatique, d'où une mauvaise régulation en température, incompatible avec les normes en vigueur pour les robinets thermostatiques, ainsi qu'un faible débit de sortie, limitant la gamme des applications possibles. Ces inconvénients sont d'autant plus marqués lorsqu'on tente de dimensionner cette cartouche pour l'intégrer à des robinets mitigeurs standardisés, c'est-à-dire lorsque la cartouche présente un diamètre extérieur de 40 mm, dans le but de remplacer une cartouche non régulée par une cartouche à régulation thermostatique.

EP-A-1 376 292, qui est au nom de la présente Demanderesse et qui divulgue une cartouche selon le préambule de la revendication 1, a fourni une solution à cette problématique, en jouant sur la disposition des entrées et des retours des fluides froid et chaud du disque fixe de la cartouche.

De leur côté, US-A-4 407 444 et FR-A-2 586 784 proposent des robinets mélangeurs dont le corps est pourvu intérieurement d'une structure à trois disques en céramique superposés. L'enseignement de ces documents n'est cependant pas transposable au domaine de l'invention, c'est-à-dire au domaine des cartouches à levier de commande unique, car, dans US-A-4 407 444 et dans FR-A-2 586 784, le débit du mélange de fluides froid et chaud est commandé par un ensemble totalement distinct d'un autre ensemble permettant de commander la température de ce mélange. Eu égard à la présence de ces deux ensembles de commande distincts, les aménagements internes de ces robinets présentent un encombrement particulièrement important et sont incompatibles avec les contraintes structurelles d'une cartouche thermostatique.

Le but de la présente invention est de proposer une cartouche thermostatique monocommande qui assure une régulation de température efficace dans une large plage de débit, notamment lorsque la cartouche présente un diamètre extérieur de 40 mm.

A cet effet, l'invention a pour objet une cartouche thermostatique monocommande, telle que définie à la revendication 1.

L'idée à la base de l'invention est de remplacer les systèmes connus à deux disques superposés par un système à trois disques superposés. Comme dans les cartouches existantes, le premier disque est totalement fixe dans la cartouche, si bien que les deuxième et troisième disques de la cartouche conforme à l'invention correspondent, en quelque sorte, au second disque des cartouches existantes. Le fait de remplacer le second disque précité par les deuxième et troisième disques selon l'invention permet, pour chacun de ces deuxième et troisième disques, de limiter les contraintes d'encombrement en ce qui concernent l'agencement des passages traversants de fluide froid et de fluide chaud dans ces disques. En effet, grâce à ces deuxième et troisième disques, on peut dissocier, d'un côté, les mouvements d'un de ces deux disques en lien avec la régulation de la température du mélange des fluides froid et chaud, et, de l'autre côté, les mouvements de l'autre disque en lien avec la régulation du débit de ce mélange. En pratique, le deuxième disque est fixe en translation de sorte que la capacité de déplacement exclusivement en rotation de ce disque par rapport au premier disque est mise à profit pour délimiter de larges entrées et retours de fluide froid et de fluide chaud, les mouvements rotatifs de ce deuxième disque étant associés à des déplacements correspondant de l'élément thermostatique aux fins de la régulation thermostatique de la cartouche. De même, le troisième disque, qui est lié en rotation au deuxième disque de sorte qu'il suit automatiquement les mouvements rotatifs du deuxième disque, présente une capacité d'entraînement exclusivement en translation par rapport au deuxième disque, de manière à commander les débits de fluide froid et de fluide chaud envoyés dans les retours de fluide du deuxième disque, indépendamment de la régulation thermostatique.

La commande des mouvements de ces deuxième et troisième disques est assurée par un unique levier associé à un écrou élaboré : le levier peut agir directement sur le troisième disque pour commander les mouvements translatifs de ce dernier, tandis qu'il agit par l'intermédiaire de l'écrou sur le deuxième disque pour commander les mouvements rotatifs de ce dernier, tout en liant en rotation ces deux disques l'un à l'autre.

La cartouche conforme à l'invention peut ainsi être traversée par un débit suffisamment important, y compris lorsque son diamètre extérieur est de 40 mm, notamment afin de répondre à la norme NF077, c'est-à-dire afin d'autoriser un débit d'au moins 12 litres/minute avec une résistance de catégorie « A ».

Des caractéristiques avantageuses de la cartouche conforme à l'invention, prises isolément ou selon toutes les combinaisons techniquement possibles, sont spécifiées aux revendications dépendantes 2 à 9.

L'invention a également pour objet un robinet mitigeur, tel que défini à la revendication 10.

L'invention sera mieux comprise à la lecture de la description qui va suivre, donnée uniquement à titre d'exemple et faite en se référant aux dessins sur lesquels :
- la figure 1 est une coupe longitudinale d'une cartouche thermostatique selon l'invention ;
- la figure 2 est une vue éclatée en perspective de trois disques appartenant à la cartouche de la figue 1 ;
- les figures 3 à 5 sont des vues en perspective de deux des trois disques de la figure 2, illustrant respectivement trois configurations de service pour ces deux disques, correspondant à trois configurations de fonctionnement possibles pour la cartouche ;
- les figures 6 et 7 sont des vues en perspective des trois disques de la figure 2, illustrant respectivement deux configurations de service de ces trois disques, correspondant à deux configurations de fonctionnement possibles de la cartouche ;
- la figure 8 est une coupe selon le plan VIII de la figure 7 ;
- les figures 9 à 11 sont des vues respectivement analogues aux figures 3 à 5, illustrant les trois mêmes configurations de fonctionnement que celles associées aux figures 3 à 5, en montrant en plus le troisième disque ;
- la figure 12 est une vue en perspective d'une partie des composants de la cartouche de la figure 1 ;
- la figure 13 est une coupe selon la ligne XIII-XIII de la figure 1, cette coupe ne montrant qu'une partie des composants de la cartouche, qui correspond pour l'essentiel à ceux montrés à la figure 12 ;
- la figure 14 est une vue analogue à la figure 13, illustrant la cartouche dans la configuration de fonctionnement associée à la figure 7 ; et
- la figure 15 est une vue en perspective d'une variante d'un des trois disques, représentée seule.

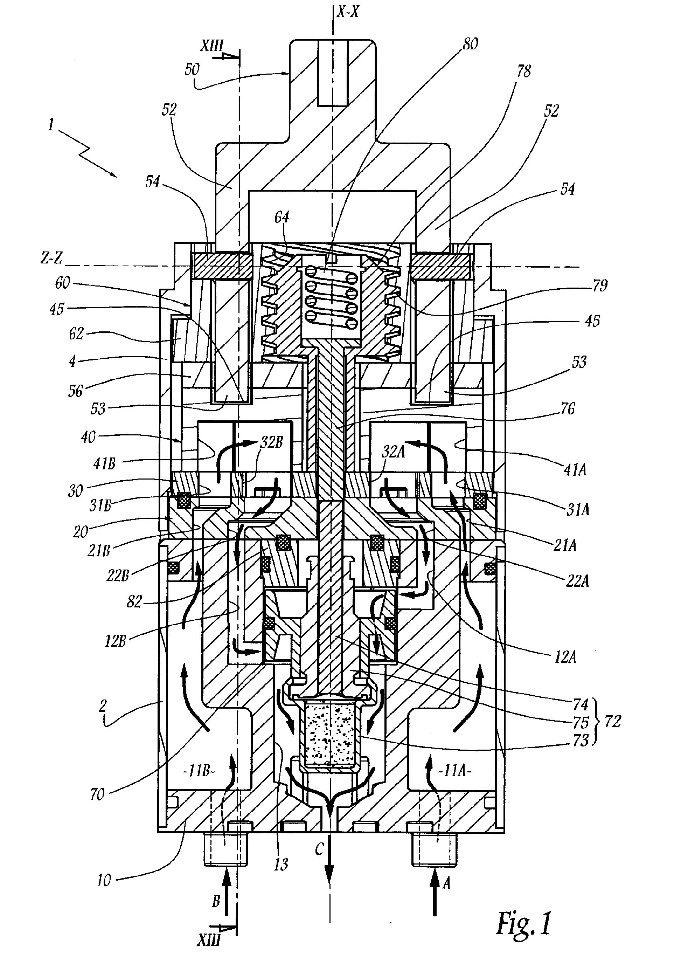

Sur la figure 1 est représentée une cartouche thermostatique 1, s'étendant longitudinalement autour d'un axe central X-X et destinée à équiper un robinet mitigeur d'eau. La suite de la description est orientée en considérant que la partie basse de la cartouche est celle représentée en partie basse sur la figure 1.

La cartouche 1 comporte des boîtiers externes tubulaires inférieur 2 et supérieur 4, centrés sur l'axe X-X et immobilisés co-axialement l'un à l'autre.

A l'intérieur du boîtier 2 est logé un corps de cartouche 10 qui présente une forme extérieure globalement cylindrique d'axe X-X, à base circulaire. Ce corps 10 délimite sur toute sa longueur, c'est-à-dire suivant la direction de l'axe X-X, un conduit d'entrée d'eau froide 11A et un conduit d'entrée d'eau chaude 11B. Le corps 10 délimite également, uniquement dans sa partie haute, un conduit de retour d'eau froide 12A et un conduit de retour d'eau chaude 12B, ces conduits 12A et 12B débouchant, à leur extrémité inférieure, dans une chambre de mélange 13, centrée sur l'axe X-X. Les conduits 11A, 11B, 12A et 12B sont positionnés angulairement et radialement par rapport à l'axe X-X de manière à ne pas communiquer directement entre eux. En outre, en service, les conduits 11A et 11 B sont prévus pour être alimentés respectivement en eau froide et en eau chaude, depuis l'extrémité inférieure du corps de cartouche 10, comme indiqué par les flèches A et B, tandis que l'extrémité inférieure de la chambre 13 évacue le mélange d'eau froide et d'eau chaude qu'elle contient, sous forme d'eau mitigée C, également à travers l'extrémité inférieure du corps 10.

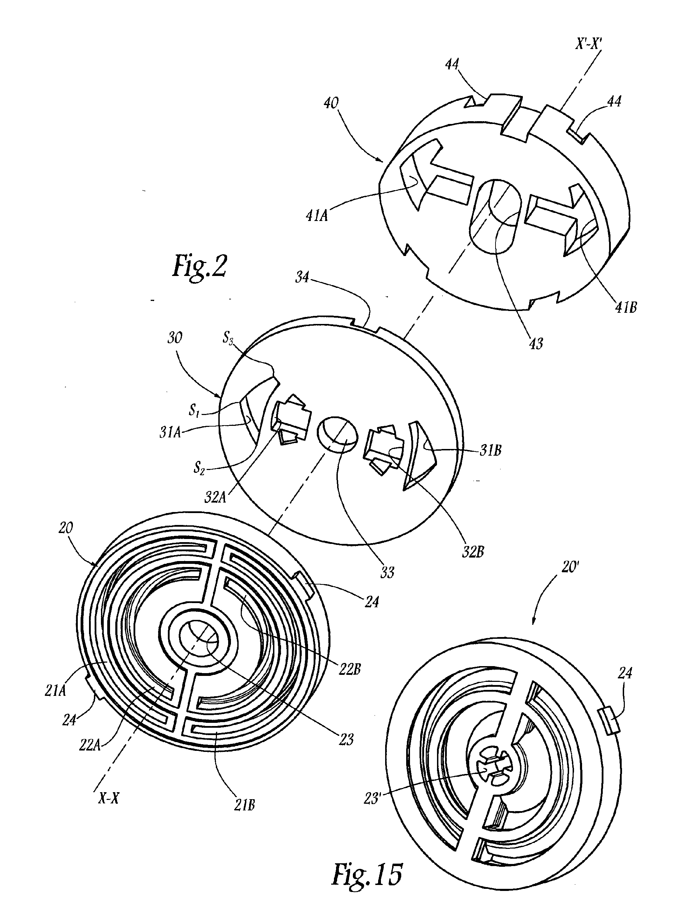

Pour permettre d'envoyer tout ou partie de l'eau froide et de l'eau chaude depuis les conduits d'entrée 11A et 11B jusqu'aux conduits de retour 12A et 12B, la cartouche 1 comporte trois disques superposés en céramique représentés seuls à la figure 2, à savoir un disque inférieur 20, un disque intermédiaire 30 et un disque supérieur 40.

Le disque 20 est assemblé fixement sur le corps de cartouche 10, de manière centrée sur l'axe X-X. Il est ainsi retenu par le boîtier 4 à la fois en translation radialement à l'axe X-X, puisque son diamètre extérieur est sensiblement égal au diamètre intérieur du boîtier, et en rotation autour de l'axe X-X, ici par exemple au moyen de deux saillies 24 qui s'étendent radialement vers l'extérieur depuis la périphérie du disque 20 de manière diamétralement opposée et qui sont reçues dans des encoches complémentaires, non visibles sur les figures, ménagées à l'intérieur du boîtier 4.

Comme bien visible sur la figure 2, le disque 20 est pourvu de plusieurs passages internes traversants qui sont positionnés de manière à ne pas communiquer directement entre eux dans le disque. Plus précisément, le disque 20 est traversé à la fois par une entrée d'eau froide 21A, par une entrée d'eau chaude 21 B, par un retour d'eau froide 22A, par un retour d'eau chaude 22B et par un orifice cylindrique 23 à base circulaire, centré sur l'axe X-X. Les entrées 21A et 21 B et les retours 22A et 22B s'étendent chacun dans le disque 20 en arcs de circonférence centrés sur l'axe X-X, de telle sorte que, lorsque le disque est assemblé au corps de cartouche 10, ils débouchent respectivement dans les conduits 11A, 11B, 12A et 12B de ce corps. Par ailleurs, en coupe longitudinale comme montré à la figure 1, la section de ces entrées et retours n'est pas nécessairement rectangulaire, mais présente un profil plus élaboré pour optimiser les écoulements d'eau à travers le disque 20.

Le disque 30 est assemblé au reste de la cartouche 1 en étant centré sur l'axe X-X, tout en étant fixe en translation radialement à cet axe, comme expliqué en détail ci-après. Par conséquent, l'axe central de ce disque est considéré par la suite comme étant l'axe X-X.

Le disque 30 est assemblé de manière plaquée contre la face supérieure du disque 20. Ces deux disques 20 et 30 présentent un diamètre extérieur sensiblement égal, de sorte que, comme bien visible à la figure 1, le disque 30 est, de la même façon que le disque 20, retenu par le boîtier 4 en translation radialement à l'axe X-X. En revanche, à la différence du disque 20, le disque 30 est mobile en rotation autour de l'axe X-X, la commande du déplacement en rotation du disque 30 étant précisée plus loin.

De la même façon que le disque 20, le disque 30 comporte plusieurs passages internes traversants, représentés en détail sur la figure 2, qui sont positionnés de manière à ne pas communiquer directement entre eux dans le disque. Ainsi, le disque 30 est traversé par une entrée d'eau froide 31A, par une entrée d'eau chaude 31 B, par un retour d'eau froide 32A, par un retour d'eau chaude 32B et par un orifice cylindrique 33 à base circulaire, centré sur l'axe X-X.

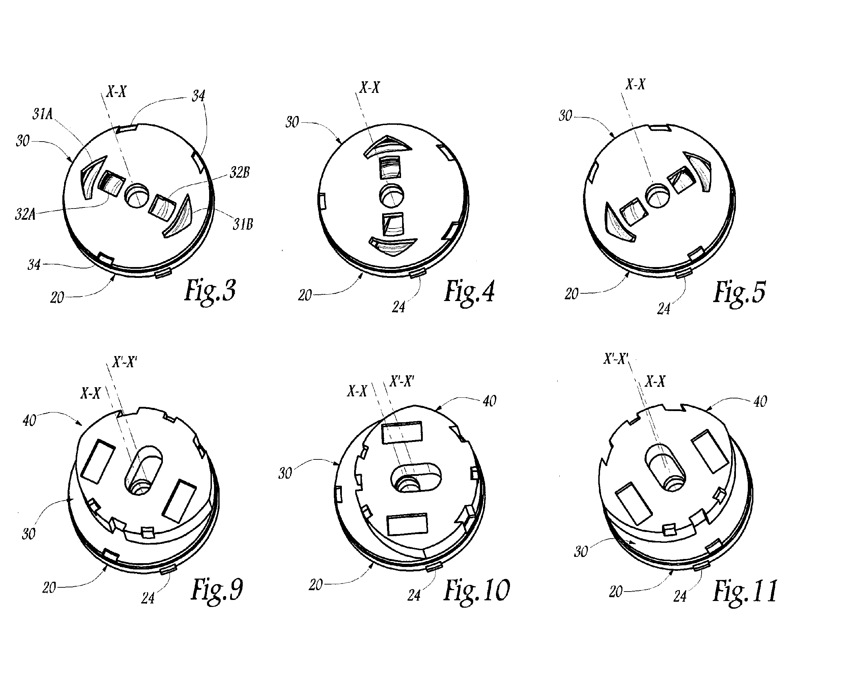

A la différence des entrées 21A et 21 B du disque 20, les entrées 31A et 31 B du disque 30 ne s'étendent pas dans le disque 30 en formant des arcs de circonférence centrés sur l'axe X-X. Ces entrées 31A et 32B présentent une géométrie plus élaborée : dans le plan du disque 30, chacune de ces entrées 31 A et 31 B présente un profil en forme globale de triangle isocèle, dont le sommet principal S₁ (figure 2) est dirigé à l'opposé de l'axe X-X, tandis que les deux autres sommets S₂ et S₃ sont situés à des distances radiales de l'axe X-X différentes l'une de l'autre. Il en résulte que, lorsque le disque 30 est assemblé au reste de la cartouche 1, notamment plaqué contre le disque 20, des parts proportionnellement opposées des entrées 31A et 31 B se trouvent en coïncidence, suivant la direction de l'axe X-X, avec le débouché vers le haut des entrées 21A et 21 B du disque 20, étant ajouté que, selon la position angulaire du disque 30 par rapport au disque 20, les valeurs des parts précitées varient. Ainsi, dans la configuration des disques 20 et 30 représentée à la figure 3, autant d'eau froide que d'eau chaude est admis respectivement dans les entrées 31 A et 31 B depuis respectivement les entrées 21 A et 21 B. En revanche, dans la configuration de la figure 4, qui est obtenue par une rotation d'environ 45° dans le sens des aiguill es d'une montre du disque 30 par rapport au disque 20 fixe, davantage d'eau chaude est admis dans l'entrée 31B que d'eau froide est admise dans l'entrée 31A. A l'inverse, dans la configuration de la figure 5, qui est obtenue depuis la configuration de la figure 3 par une rotation d'environ 45° dans le sens inverse des aiguilles d'une montre du disque 30 par rapport au disque 20, davantage d'eau froide est admis dans l'entrée 31A que d'eau chaude est admise dans l'entrée 31 B.

Les retours 32A et 32B du disque 30 s'étendent, quant à eux, en arcs de circonférence centrés sur l'axe X-X. Dans la configuration assemblée de la cartouche 1, ces retours 32A et 32B débouchent respectivement dans les retours 22A et 22B du disque 20, et ce dans les mêmes proportions respectives, quelle que soit la position angulaire du disque 30 par rapport au disque 20.

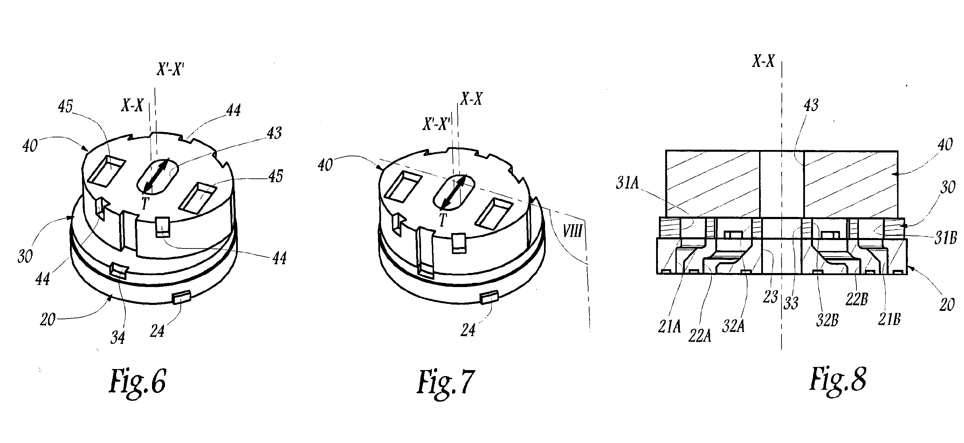

Le disque 40 est assemblé au reste de la cartouche 1 en étant plaqué contre la face supérieure du disque 30. Ce disque 40 est mobile par rapport au disque 30 en translation radialement à l'axe X-X de sorte que l'axe central du disque 40, référencé X'-X', est maintenu parallèle à l'axe X-X, mais à une distance variable par rapport à cet axe X-X, ces deux axes pouvant être confondus dans une certaine configuration de fonctionnement. La direction de translation du disque 40 est indiquée par une double flèche référencée T sur les figures 6 et 7. En pratique, pour permettre le débattement translatif entre les disques 30 et 40, la dimension radiale du disque 40, mesurée suivant la direction de translation T, est plus petite que le diamètre du disque 30. Dans l'exemple de réalisation considéré ici, le profil extérieur du disque 40 n'est pas rigoureusement circulaire, mais est constitué de deux arcs de cercle symétriques par rapport à l'axe X'-X', qui présentent un rayon égal à celui du profil extérieur du disque 30, tout en correspondant chacun à moins d'un demi-cercle. Il en résulte que, lorsque le disque 40 occupe, par rapport au disque 30, l'une ou l'autre des deux positions translatées extrêmes illustrées respectivement sur les figures 6 et 7, sa surface extérieure s'étend pour moitié dans le prolongement axial de celle du disque 30, tandis que son autre moitié est située à l'aplomb axial de la face supérieure du disque 30.

Le disque 40 délimite deux passages internes de fluide, à savoir un passage d'eau froide 41 A et un passage d'eau chaude 41B. Ces passages ne débouchent pas sur la face supérieure du disque 40 de sorte qu'ils forment des chambres de circulation d'eau à l'intérieur du disque. Comme bien visible sur la figure 2, ces passages 41A et 41B présentent, dans le plan du disque 40, un profil extérieur correspondant à celui que formerait la réunion de l'entrée 31A et du retour 32A, respectivement de l'entrée 31B et du retour 32B, en incluant la portion du disque 20 radialement interposée entre cette entrée et cette sortie. De la sorte, lorsque le disque 40 occupe la position translatée des figures 1 et 6 par rapport au disque 30, son passage 41A met en communication totale l'entrée 31A avec le retour 32A du disque 30, tandis que, dans le même temps, son passage 41B met en communication totale l'entrée 31B avec le retour 32B : la cartouche 1 est alors dite en pleine ouverture. En revanche, lorsque le disque 40 est dans la position translatée des figures 7 et 8, les passages 41 A et 41B sont suffisamment écartés, suivant la direction de translation T, du débouché vers le haut des entrées et retours 31A, 31B, 32A et 32B pour que le disque 40 obture la circulation d'eau entre eux : la cartouche 1 est alors dite en pleine fermeture. Lorsque le disque 40 occupe une position translatée intermédiaire entre les deux positons extrêmes des figures 6 et 7, on comprend qu'une partie seulement de l'eau provenant des entrées 31 A et 31 B est admise, via respectivement les passages 41 A et 41 B, dans les retours 32A et 32B : la cartouche 1 est donc partiellement ouverte.

De plus, le disque 40 est lié en rotation au disque 30, ce qui revient à dire que la position angulaire de ces deux disques autour de l'axe X-X est fixe. Les moyens permettant cette immobilisation angulaire relative seront détaillés plus loin, étant d'ores et déjà remarqué qu'on comprend que, de la sorte, le réglage de la position angulaire du disque 30 par rapport au disque 20 est indépendant du réglage de la position translatée du disque 40 par rapport au disque 30. Cela est illustré par les figures 9 à 11, qui montrent les disques 20 et 30 dans les mêmes configurations respectives que les figures 3 à 5, avec le disque 40 représenté en plus alors que ce dernier est en configuration de pleine ouverture.

Par ailleurs, pour des raisons spécifiées plus loin, le disque 40 est également traversé de part en part par un orifice 43 centré sur l'axe X'-X'. Cet orifice 43 est cylindrique à base oblongue, avec la dimension la plus grande de cette base oblongue qui s'étend suivant la direction de translation T.

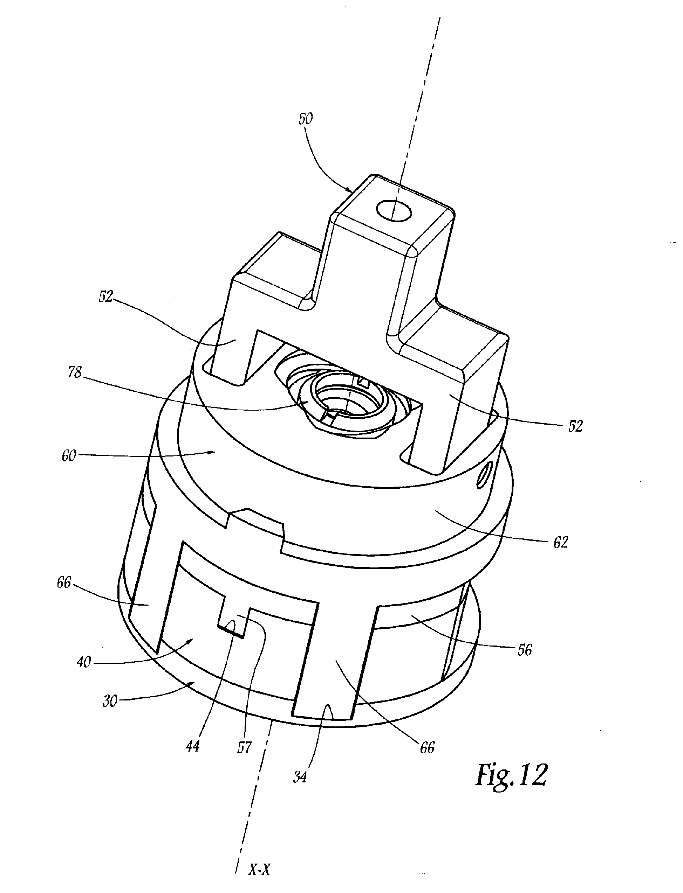

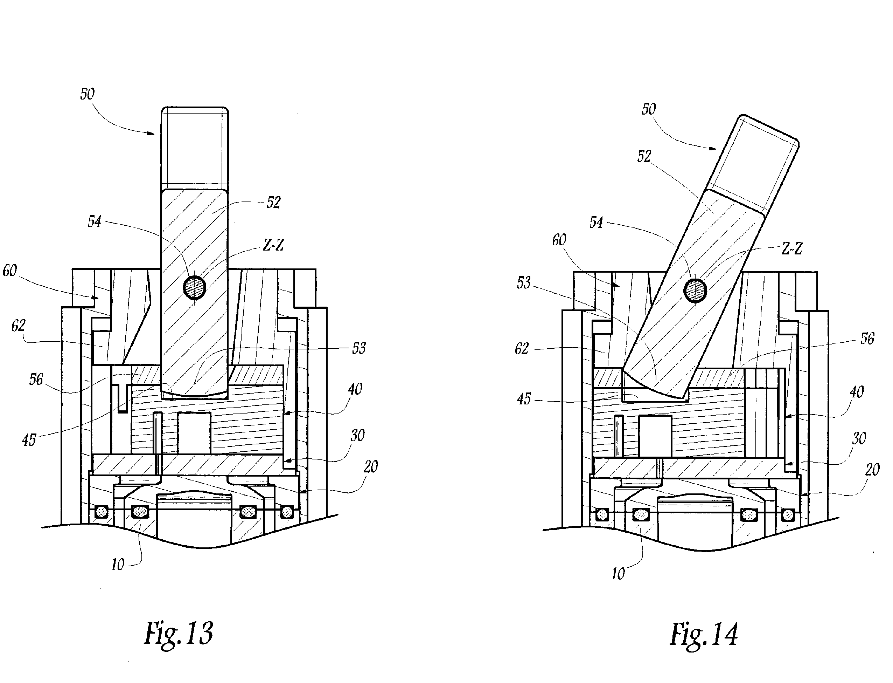

Pour permettre d'entraîner les disques 30 et 40, la cartouche 1 comporte un levier de commande 50 qui présente la forme d'un étrier avec deux branches parallèles 52, comme bien visible sur les figures 12 à 14. Les extrémités inférieures 53 des branches 52 sont en prise mécanique directe avec le disque 40, tandis qu'elles sont reliées mécaniquement au disque 30 par un écrou élaboré 60. Cet écrou 60 comprend un corps principal 62 globalement tubulaire, centré sur l'axe X-X et pourvu intérieurement d'un taraudage central 64. Les branches 52 du levier 50 traversent de part en part la paroi du corps 62, de manière diamétralement opposée par rapport à l'axe X-X, en étant assemblées au corps 62 par des pions respectifs 54, alignés conjointement suivant une direction radiale à l'axe X-X, comme bien visible sur la figure 1. Les pions 54 lient l'un à l'autre le levier 50 et l'écrou 60 en rotation autour de l'axe X-X, tout en formant un axe Z-Z de basculement du levier 50 par rapport au reste de la cartouche 1, comme cela ressort de la comparaison des figures 13 et 14.

Le corps 62 de l'écrou 60 est prolongé vers le bas par trois pattes saillantes 66 réparties suivant la périphérie extérieure du corps 62. Ces pattes 66 sont dimensionnées pour que leur extrémité inférieure soit reçue de manière complémentaire dans des encoches 34 ménagées en périphérie extérieure de la face supérieure du disque 30, ces encoches étant visibles sur les figures 3 à 5. de la sorte, dans l'état assemblé de la cartouche 1, l'écrou 60 commande la position angulaire du disque 30 autour de l'axe X-X.

Un palier 56 est axialement interposé entre la face supérieure du disque 40 et la face inférieure du corps 62 de l'écrou 60. Ce palier 56 est assemblé fixement à la face supérieure du disque 40, par exemple ici par la coopération entre trois encoches 44 (figures 2, 6 et 9 à 11) ménagées en périphérie extérieure de la face supérieure du disque 40 et trois saillies complémentaires 57, dont l'une est visible à la figure 12, ménagées à la périphérie extérieure de la face inférieure du palier 56. La face supérieure est, quant à elle, plaquée en appui plan glissant contre la face inférieure du corps 62 de l'écrou 60. En pratique, ce palier est constitué d'une matière plastique anti-adhérente.

De plus, le palier 56 est traversé de part en part par les deux branches 52 du levier 50 de manière que les extrémités inférieures 53 des branches soient reçues dans des encoches 45 sensiblement complémentaires, creusées dans la face supérieure du disque 40, comme bien visible sur les figures 1 et 13. De la sorte, lorsque le levier 50 bascule autour de l'axe Z-Z, les extrémités 53 de ces branches 52 poussent ou tirent le disque 40, le cas échéant par l'intermédiaire du palier 56, suivant la direction de translation T. Indépendamment du basculement du levier, l'entraînement de ce dernier en rotation autour de l'axe X-X provoque la mise en rotation correspondante du disque 40, le cas échéant par l'intermédiaire du palier 56, par coopération des extrémités 53 des branches 52 avec les encoches 45, et le cas échant avec les trous traversants correspondants du palier 56, et ce quelle que soit la position basculée du levier 50.

La cartouche 1 intègre en outre une fonction de régulation thermostatique. A cet effet, elle comporte un tiroir 70, qui est disposé dans la chambre 13 du corps de cartouche 10, et un élément thermostatique 72 centré sur l'axe X-X, qui inclut une coupelle thermosensible 73 et un piston 74 déplaçable en translation suivant l'axe X-X sous l'effet de la dilatation d'une matière thermo-dilatable contenue à l'intérieur de cette coupelle. Le tiroir 70 est assemblé fixement à un fourreau 75 de guidage du piston 74, solidaire de la coupelle 73. L'extrémité libre du piston 74 est en appui contre une tige rigide 76 qui s'étend vers le haut dans le prolongement rectiligne du piston 74, jusqu'à l'intérieur d'une douille 78, centrée sur l'axe X-X et munie d'un filetage extérieur 79 complémentaire du taraudage 64 de l'écrou 60. Entre la tige 76 et la douille 78 est interposé un ressort 80 qui présente une raideur forte : tant que le tiroir 70 peut être déplacé à l'intérieur de la chambre 13 sans buter axialement contre une surface résistante, le ressort 80 transmet rigidement les efforts entre la tige 76 et la douille 78, tandis que, en cas de sur-course du piston 74 alors que le tiroir 70 bute contre une surface résistante, le ressort 80 accommode cette sur-course, évitant ainsi l'endommagement du tiroir et/ou de l'élément thermostatique 72.

A l'état assemblé de la cartouche 1, la douille 78 est montée vissée à l'intérieur du corps 62 de l'écrou 60, tout en étant bloquée en rotation par rapport au boîtier 4, tandis que le tiroir 70 et l'élément thermostatique 72 sont disposés à l'intérieur de la chambre 13, avec fermeture partielle de l'extrémité supérieure de cette dernière par un anneau 82. La périphérie extérieure du tiroir 70 forme ainsi, à son extrémité inférieure, un obturateur pour le débouché aval du conduit 12A et, à son extrémité supérieure, un obturateur pour le débouché aval du conduit 12B, comme représenté sur la figure 1. Le piston 74 et la tige 76 sont reçus de manière ajustée à travers les orifices centraux 23 et 33 des disques 20 et 30. De même, la tige 76 traverse le disque 40 via son orifice oblong central 43, en étant ajustée sur la dimension la plus petite de la section transversale de cet orifice 43.

En pratique, plusieurs solutions techniques sont envisageables pour lier en rotation la douille 78 et le boîtier 4, tout en permettant la translation relative de la douille suivant l'axe X-X. Une première solution, non représentée en détail sur la figure 1, consiste à prévoir une interface de liaison mécanique, directe ou indirecte, entre la douille 78 et le boîtier 4, sous la forme de nervures orientées suivant l'axe X-X. Une autre solution, illustrée sur la figure 15, repose sur l'utilisation d'une variante du disque inférieur, référencée 20 : ce disque 20' se distingue du disque 20 des autres figures uniquement par la géométrie de son orifice central 23' dont la section transversale présente un profil multilabé, ici globalement en forme de trèfle. En conformant l'extrémité inférieure de la tige 76 de manière complémentaire à cet orifice 23', cette tige se trouve liée en rotation au disque 20 à l'état assemblé de la cartouche, tout en pouvant se translater suivant l'axe X-X. Via, par exemple, une liaison mécanique à cannelures axiales entre la tige 76 et la douille 78, cette dernière est ainsi bloquée en rotation autour de l'axe X-X par l'intermédiaire du disque 20', tout en autorisant sa translation relative suivant cet axe, sans nécessiter d'aménagement additionnel du boîtier 4.

Le fonctionnement de la cartouche 1 est le suivant.

Lorsqu'on considère que la cartouche 1 est dans la configuration de la figure 1, l'eau froide A entre dans cette cartouche par le conduit 11A, empreinte successivement les entrées 21A et 31A, circule dans le passage 41A, descend successivement par les retours 32A et 22A puis par le conduit 12A, et parvient dans la chambre 13 à condition que le tiroir 70 n'obture pas le débouché aval de ce conduit. Simultanément, l'eau chaude B monte par le conduit 11 B, empreinte successivement les entrées 21 B et 31 B, circule dans le passage 41 B, descend successivement par le retour 32B, le retour 22B et le conduit 12B, et se répend à l'intérieur de la chambre 13 à condition que le tiroir 70 n'obture pas le débouché aval du conduit 12B. A la base du tiroir 70, l'eau chaude et l'eau froide se mélangent, en s'écoulant autour de la coupelle thermosensible 73, jusqu'à ce que l'eau mitigée C ainsi obtenue soit évacuée de la cartouche 1.

Le réglage du débit de l'eau mitigée C est obtenu en basculant le levier 50 autour de l'axe Z-Z : ce basculement provoque la translation suivant la direction T du disque 40 par rapport au disque 30, ce qui provoque, comme expliqué plus haut, la variation des sections d'écoulement pour respectivement l'eau chaude et l'eau froide, résultant de la superposition des disques 30 et 40, et ce entre la pleine ouverture et la pleine fermeture de la cartouche 1.

Le réglage de la température de l'eau mitigée C est, quant à lui, obtenu par la rotation du levier 50 autour de l'axe X-X. Cette rotation entraîne la rotation conjointe des disques 30 et 40 par rapport au disque 20, et ce quelle que soit la position basculée du levier 50. Comme expliqué plus haut, les sections d'écoulement pour respectivement l'eau chaude et l'eau froide, résultant de la superposition des disques 20 et 30, sont alors plus ou moins étendues l'une par rapport à l'autre.

En raisonnant à position fixe en rotation du levier 50 par rapport au reste de la cartouche 1, la régulation thermostatique fonctionne de la façon suivante : si la température de l'eau mitigée C dans la chambre 13 augmente, par exemple en raison d'une baise de la pression d'alimentation en eau froide, la coupelle thermosensible 73 transmet un supplément de chaleur à la matière thermo-dilatable qu'elle contient, de sorte qu'une force de poussée supplémentaire est générée entre la coupelle 73 et le piston 74. Dans la mesure où le piston 74 est en appui contre la douille 78, par l'intermédiaire de successivement la tige 76 et le ressort 80, l'élément thermostatique 72 s'allonge, c'est-à-dire que sa coupelle 73 s'éloigne de son piston 74. Le tiroir 70 est entraîné de manière correspondante à l'intérieur de la chambre 13, c'est-à-dire que, dans le même temps, il obture davantage le débouché aval du conduit 12B, tout en ouvrant davantage le débouché aval du conduit 12A. Autrement dit, davantage d'eau froide A est admis dans la chambre 13 tandis que moins d'eau chaude B peut y pénétrer: la température de l'eau mitigée C diminue donc. A l'inverse de ce qui vient d'être décrit, quand la température de l'eau mitigée diminue, le tiroir 70 et l'élément thermostatique 72 fonctionnent de façon inverse. Les corrections de la température de l'eau mitigée s'équilibrent ainsi jusqu'à la stabilisation de la température a une valeur pré-établie, qui dépend de l'altitude à laquelle culmine le piston 74.

Ainsi, lorsque cette fois ci le levier 50 est entraîné en rotation autour de l'axe X-X, en plus du mouvement conjoint des disques 30 et 40 décrit plus haut, la rotation de l'écrou 60 entraîne la douille 78 en translation suivant l'axe X-X, puisque cette douille est fixe en rotation par rapport au boîtier 4. L'élément thermostatique 72 subit alors le même mouvement de translation, étant remarqué que la coupelle 73 a tendance à se déplacer en translation de sens inverse en raison de la correction par le tiroir 70, selon le principe vu ci-dessus. Le pas du taraudage 64 et du filetage de la douille 78 est adapté pour autoriser à la fois le réglage de la température de l'eau mitigée C par le levier 50 et la marche des corrections de température par l'élément thermostatique 72, de façon à imposer à l'eau mitigée une température souhaitée, repérée par exemple par une bague graduée, non représentée, rapportée sur la face extérieure du boîtier 4. En d'autres termes, l'altitude à laquelle culmine le piston 74 de l'élément thermostatique 72 est directement imposée par la position en rotation du levier 50 par rapport au reste de la cartouche 1.

Ainsi, la cartouche 1 intègre une fonction de régulation thermostatique, tout en désaccouplant le réglage de la température de l'eau mitigée, grâce à la capacité de déplacement exclusivement rotative du disque 30 par rapport au disque 20, et le réglage du débit de l'eau mitigée, grâce à la capacité de déplacement exclusivement translative du disque 40 par rapport au disque 30. On dispose ainsi d'une cartouche thermostatique monocommande efficace, dans laquelle on dissocie les contraintes de dimensionnement et d'emplacement des passages de circulation d'eau dans le disque 30 et dans le disque 40. Ainsi, pour implanter et dimensionner les entrées 31 A et 31 B et les retours 32A et 32B du disque 30, on dispose de plus de place dans le disque 30 que si ce dernier était déplaçable en translation en plus d'être déplaçable en rotation. Il en est de même pour les passages 41A et 41 B au sein du disque 40 si ce dernier était déplaçable en rotation par rapport au disque 30, en plus d'être déplaçable en translation. Il en résulte que, pour un diamètre extérieur donné du corps 10, ces entrées 31 A et 31 B, ces retours 32A et 32B et ces passages 41 A et 41 B sont individuellement plus étendus que si les disques 30 et 40 présentaient une double capacité de déplacement. La cartouche 1 permet donc une circulation d'eau sous un débit plus important. En particulier, la cartouche 1 répond à la norme NF077, c'est-à-dire qu'elle peut être traversée par un débit d'eau d'au moins 12 litres/minute avec une résistance de catégorie « A », alors que le diamètre extérieur des boîtiers externes 2 et 4, et donc celui du corps de cartouche 10 à la faible épaisseur de la paroi de ces boîtiers près, valent 40 mm environ.

Divers aménagements et variantes de la cartouche 1 décrite ci-dessus sont par ailleurs envisageables. A titre d'exemples :
- le disque 20 et/ou le disque 30 peuvent être traversé(s) de plusieurs entrées d'eau froide et/ou de plusieurs entrées d'eau chaude et/ou de plusieurs retours d'eau froide et/ou de plusieurs retours d'eau chaude ; et/ou
- un organe annulaire de génération de turbulences, couramment appelé « turbulateur », peut être rapporté à l'intérieur de la chambre 13, en particulier autour de la coupelle 73, pour homogénéiser en température l'écoulement de l'eau mitigée C en sortie de la cartouche 1.

## Revendications

1. Cartouche thermostatique monocommande (1), comportant :
- un corps (10) qui délimite intérieurement une chambre (13) pour mélanger un fluide froid (A) et un fluide chaud (B),
- un premier disque (20 ; 20'), qui est fixe par rapport au corps et qui délimite à travers lui, à la fois, au moins une entrée (21 A) et au moins un retour (22A) de fluide froid, et au moins une entrée (21 B) et au moins un retour (22B) de fluide chaud,
- des moyens de communication fluidique (30, 40), qui sont mobiles par rapport au premier disque et qui sont adaptés pour mettre en communication, d'une part, l'entrée avec le retour de fluide froid du premier disque, et, d'autre part, l'entrée avec le retour de fluide chaud du premier disque,
- un tiroir de régulation (70) qui est disposé dans la chambre, en aval des retours de fluide froid et de fluide chaud du premier disque,
- un élément thermostatique (72) qui est au moins en partie disposé dans la chambre et qui est relié mécaniquement au tiroir de régulation, et
- un unique levier (50) de commande du débit et de la température de mélange des fluides froid et chaud, qui est adapté à la fois pour entraîner en déplacement les moyens de communication par rapport au premier disque et pour déplacer l'élément thermostatique à l'intérieur de la chambre,
**caractérisée en ce que** les moyens de communication comprennent :
- un deuxième disque (30), qui est à la fois, par rapport au premier disque (20 ; 20'), fixe en translation radialement à un axe central (X-X) du corps (10) et déplaçable en rotation autour de l'axe sous l'action d'entraînement du levier de commande (50) par l'intermédiaire d'un écrou dans lequel est partiellement reçu un ensemble (76, 78, 80) de déplacement de l'élément thermostatique (72), qui est lié au levier de commande en rotation autour de l'axe (X-X), et qui est muni de prolongements (66) en prise mécanique avec le deuxième disque pour entraîner ce dernier en rotation, et
- un troisième disque (40), qui est à la fois, par rapport au deuxième disque, lié en rotation autour de l'axe et déplaçable en translation radialement à l'axe sous l'action d'entraînement du levier de commande, et qui délimite, d'une part, un passage de fluide froid (41 A) adapté pour mettre en communication l'entrée (21A) avec le retour (22A) de fluide froid du premier disque via au moins une entrée (31 A) et au moins un retour (32A) de fluide froid délimités à travers le deuxième disque, et, d'autre part, un passage de fluide chaud (41 B) adapté pour mettre en communication l'entrée (21 B) avec le retour (22B) de fluide chaud du premier disque via au moins une entrée (31 B) et au moins un retour (32B) de fluide chaud délimités à travers le deuxième disque.

2. Cartouche suivant la revendication 1, **caractérisée en ce que** le levier de commande (50) comprend au moins une branche (52) qui est montée à basculement sur l'écrou (60) et dont une extrémité (53) est en prise mécanique avec le troisième disque (40) pour entraîner ce dernier en translation.

3. Cartouche suivant la revendication 2, **caractérisée en ce que** l'écrou (60) comprend un corps globalement tubulaire (62), qui est centré sur l'axe (X-X), auquel sont assemblées la ou les branches (52) du levier de commande (50), et depuis lequel s'étendent lesdits prolongements (66), en étant répartis suivant la périphérie extérieure de ce corps.

4. Cartouche suivant l'une des revendications 2 ou 3, **caractérisée en ce que**, entre le troisième disque (40) et l'écrou (60) est interposé un palier (56), qui présente une face solidarisée fixement au troisième disque tandis que sa face opposée est en contact glissant contre l'écrou, l'extrémité (53) de la ou chaque branche (52) du levier de commande (50) traversant ce palier de part en part, de manière sensiblement complémentaire.

5. Cartouche suivant l'une quelconque des revendications précédentes, **caractérisée en ce que** l'ensemble de déplacement de l'élément thermostatique (72) comprend une douille filetée (78), qui est liée en rotation par rapport au corps (10), qui est vissée à l'intérieur de l'écrou (60), et contre laquelle l'élément thermostatique (72) ou un prolongement rigide (76) de celui-ci est appuyé, de préférence avec interposition d'un ressort de sur-course (80).

6. Cartouche suivant la revendication 5, **caractérisée en ce que** la douille filetée (78) est liée en rotation par rapport au corps (10) par l'intermédiaire du premier disque (20').

7. Cartouche suivant l'une quelconque des revendications 5 ou 6, **caractérisée en ce que** l'élément thermostatique (72) ou le prolongement rigide (76) de celui-ci est centré sur l'axe (X-X) et traverse de part en part, à la fois, le premier disque (20 ; 20') via un orifice (23 ; 23') sensiblement complémentaire délimité à travers ce premier disque, le deuxième disque (30) via un orifice (33) sensiblement complémentaire délimité à travers ce deuxième disque, et le troisième disque (40) via un orifice oblong délimité à travers ce troisième disque, cet orifice oblong présentant, en coupe transversale à l'axe, une dimension la plus petite qui est ajustée sur la dimension correspondante de l'élément thermostatique ou du prolongement rigide de celui-ci, tandis que sa dimension la plus grande est orientée selon la direction de translation (T) du troisième disque.

8. Cartouche suivant l'une quelconques des revendications précédentes, **caractérisée en ce que** le corps (10), le premier disque (20 ; 20') et le deuxième disque (30) présentent sensiblement le même diamètre extérieur, qui est sensiblement égal au diamètre intérieur d'un boîtier de réception (2, 4) et qui, en particulier, vaut 40 mm environ.

9. Cartouche suivant l'une quelconque des revendications précédentes, **caractérisée en ce que** les entrées de fluide froid (31 A) et de fluide chaud (31 B) du deuxième disque (30) présentent, en coupe transversale à l'axe (X-X), globalement la forme d'un triangle isocèle dont le sommet principal (S₁) est dirigé à l'opposé de l'axe.

10. Robinet mitigeur comportant une cartouche thermostatique monocommande conforme à l'une quelconque des revendications précédentes.

## Patentansprüche

1. Einhebel-Thermostatkartusche (1), umfassend:
- einen Körper (10), der im Inneren eine Kammer (13) zum Mischen eines kalten Fluids (A) und eines warmen Fluids (B) begrenzt,
- eine erste Scheibe (20; 20'), die in Bezug auf den Körper feststehend ist und die durch sie hindurchgehend sowohl mindestens einen Eintritt (21A) und mindestens einen Rücklauf (22A) für kaltes Fluid und mindestens einen Eintritt (21B) und mindestens einen Rücklauf (22B) für warmes Fluid begrenzt,
- Mittel (30, 40) für eine fluidische Verbindung, die in Bezug auf die erste Scheibe beweglich sind und die angepasst sind, den Eintritt mit dem Rücklauf für kaltes Fluid der ersten Scheibe einerseits und den Eintritt mit dem Rücklauf für warmes Fluid der ersten Scheibe andererseits in Verbindung zu setzen,
- einen Regelkolben (70), der in der Kammer stromabwärts zu den Rückläufen für kaltes Fluid und warmes Fluid der ersten Scheibe angeordnet ist,
- ein Thermostatelement (72), das mindestens teilweise in der Kammer angeordnet ist und das mechanisch mit dem Regelkolben verbunden ist, und
- einen einzigen Steuerhebel (50) für den Durchfluss und die Temperatur der Mischung der warmen und kalten Fluide, der angepasst ist gleichzeitig die Mittel zur Verbindung in Bezug auf die erste Scheibe für eine Verschiebung mitzunehmen und das Thermostatelement im Inneren der Kammer zu verschieben,
**dadurch gekennzeichnet, dass** die Mittel zur Verbindung umfassen:
- eine zweite Scheibe (30), die gleichzeitig in Bezug auf die erste Scheibe (20; 20') translatorisch radial zu einer Mittelachse (X-X) des Körpers (10) feststehend ist und rotatorisch um die Achse unter der Mitnehmerwirkung des Steuerhebels über eine Mutter verschiebbar ist, in der teilweise eine Anordnung (76, 78, 80) zum Verschieben des Thermostatelements (72) aufgenommen ist, die mit dem Steuerhebel rotatorisch um die Achse (X-X) verbunden ist und die mit Verlängerungen (66) in mechanischem Eingriff mit der zweiten Scheibe ausgerüstet ist, um diese letztere zur Drehung anzutreiben, und
- eine dritte Scheibe (40), die unter der Wirkung des Antriebs des Steuerhebels gleichzeitig in Bezug auf die zweite Scheibe rotatorisch um die Achse verbunden und translatorisch verschiebbar radial zur Achse ist und die einerseits einen Durchgang (41A) für kaltes Fluid, der angepasst ist, den Eintritt (21A) mit dem Rücklauf (22A) für kaltes Fluid der ersten Scheibe über mindestens einen Eintritt (31A und mindestens einen Rücklauf (32A) für kaltes Fluid, die durch die zweite Scheibe hindurch begrenzt sind, in Verbindung zu setzen und andererseits einen Durchgang (41B) für warmes Fluid begrenzt, der angepasst ist, den Eintritt (21B) mit dem Rücklauf (22B) für warmes Fluid der ersten Scheibe über mindestens einen Eintritt (31B) und mindestens einen Rücklauf (32B) für warmes Fluid, die durch die zweite Scheibe hindurch begrenzt sind.

2. Kartusche nach Anspruch 1, **dadurch gekennzeichnet, dass** der Steuerhebel (50) mindestens einen Arm (52) umfasst, der schwenkend an der Mutter (60) montiert ist und dessen eines Ende (53) mechanisch im Eingriff mit der dritten Scheibe (40) ist, um letztere translatorisch mitzunehmen.

3. Kartusche nach Anspruch 2, **dadurch gekennzeichnet, dass** die Mutter (60) einen im Wesentlichen rohrförmigen Körper (62) umfasst, der auf die Achse (X-X) zentriert ist, in dem der oder die Arme (52) des Steuerhebels (50) moniert sind und von dem sich die Verlängerungen (66) erstrecken, wobei diese um die äußere Peripherie dieses Körpers herum verteilt sind.

4. Kartusche nach einem der Ansprüche 2 oder 3, **dadurch gekennzeichnet, dass** zwischen der dritten Scheibe (40) und der Mutter (60) ein Lager (56) angeordnet ist, das eine fest mit der dritten Scheibe verbundene Fläche aufweist, während seine gegenüberliegende Fläche in gleitendem Kontakt gegen die Mutter ist, wobei das Ende (53) des oder jedes Arms (52) des Steuerhebels (50) dieses Lager vollständig in im Wesentlichen komplementärer Weise durchquert.

5. Kartusche nach einem beliebigen der vorhergehenden Ansprüche, **dadurch gekennzeichnet, dass** die Anordnung zur Verschiebung des Thermostatelements (72) eine Gewindehülse (78) umfasst, die rotatorisch in Bezug auf den Körper (10) verbunden ist, die im Inneren der Mutter (60) eingeschraubt ist und gegen die das Thermostatelement (72) oder eine starre Verlängerung (76) desselben abgestützt ist, vorzugsweise unter Zwischenanordnung einer Nachlauffeder (80).

6. Kartusche nach Anspruch 5, **dadurch gekennzeichnet, dass** die Gewindehülse (78) rotatorisch in Bezug auf den Körper (10) über die erste Scheibe (20') verbunden ist.

7. Kartusche nach einem beliebigen der Ansprüche 5 oder 6, **dadurch gekennzeichnet, dass** das Thermostatelement (72) oder die starre Verlängerung (76) desselben auf die Achse (X-X) zentriert ist und vollständig sowohl die erste Scheibe (20; 20') über eine im Wesentlichen komplementäre Öffnung (23; 23'), die durch diese erste Scheibe hindurch begrenzt ist, als auch die zweite Scheibe (30) über eine im Wesentlichen komplementäre und durch diese zweite Scheibe hindurch begrenzte Öffnung (33) und die dritte Scheibe (40) über eine längliche Öffnung, die durch diese dritte Scheibe hindurch begrenzt ist, durchquert, wobei diese längliche Öffnung im Querschnitt zur Achse eine kleinste Abmessung, die auf die korrespondierende Abmessung des Thermostatelements oder der starren Verlängerung desselben angepasst ist, aufweist, während ihre größte Abmessung gemäß der Verschiebungsrichtung (T) der dritten Scheibe ausgerichtet ist.

8. Kartusche nach einem beliebigen der vorhergehenden Ansprüche, **dadurch gekennzeichnet, dass** der Körper (10), die erste Scheibe (20; 20') und die zweite Scheibe (30) im Wesentlichen denselben Außendurchmesser aufweisen, der im Wesentlichen gleich dem Innendurchmesser eines Aufnahmegehäuses (2, 4) ist und der insbesondere ungefähr 40 mm beträgt.

9. Kartusche nach einem beliebigen der vorhergehenden Ansprüche, **dadurch gekennzeichnet, dass** die Eintritte des kalten Fluids (31A) und des warmen Fluids (31B) der zweiten Scheibe (30) im Querschnitt zur Achse (X-X) im Wesentlichen die Form eines gleichschenkligen Dreiecks aufweisen, dessen Hauptspitze (S₁) entgegengesetzt zur Achse gerichtet ist.

10. Mischhahn, eine Einhebel-Thermostatkartusche nach einem beliebigen der vorhergehenden Ansprüche umfassend.

## Claims

1. A single-control thermostatic cartridge (1), having:
- a body (10) which delimits internally a chamber (13) for mixing a cold fluid (A) and a hot fluid (B),
- a first disk (20; 20') which is stationary relative to the body and which delimits through it at the same time at least one inlet (21A) and at least one cold fluid return line (22A), and at least one inlet (21B) and at least one host fluid return line (22B),
- fluid communication means (30, 40) which can move relative to the first disk and are adapted so as, on the one hand, to bring the inlet into communication with the cold fluid return line of the first disk and, on the other hand, to bring the inlet into communication with the cold water return line of the first disk,
- a regulator slide (70) which is arranged in the chamber, downstream of the cold fluid and hot fluid return lines of the first disk,
- a thermostatic element (72) which is at least partially arranged in the chamber and which is mechanically connected to the regulator slide, and
- a single lever (50) for controlling the flow rate and mixing temperature of the cold and hot fluids, which is adapted so as simultaneously to drive the communication means in displacement relative to the first disk and to displace the thermostatic element inside the chamber,
**characterized in that** the communication means comprise:
- a second disk (30) which, relative to the first disk (20; 20'), is both stationary in translational movement radially to the central axis (X-X) of the body (10) and can be displaced in rotation about the axis under the action of the driving of the control lever (50) via a nut in which an assembly (76, 78, 80) for displacing the thermostatic element (72) is partially accommodated, said assembly being linked to the control lever in rotation about the axis (X-X) and equipped with extensions (66) mechanically engaging with the second disk in order to drive the latter in rotation, and
- a third disk (40) which, relative to the second disk, is both linked in rotation about the axis and can be displaced in translation radially to the axis under the action of the driving of the control lever and which delimits, on the one hand, a cold fluid passage (41A) adapted so as to bring the inlet (21A) into communication with the cold fluid return line (22A) of the first disk via at least one inlet (31A) and at least one cold fluid return line (32A) which are delimited through the second disk and, on the other hand, a hot fluid passage (41B) adapted so as to bring the inlet (21B) into communication with the hot fluid return line (22B) of the first disk via at least one inlet (31B) and at least one hot fluid return line (32B) which are delimited through the second disk.

2. The cartridge as claimed in claim 1, **characterized in that** the control lever (50) comprises at least one prong (52) which is mounted so as to pivot on the nut (60) and one end (53) of which mechanically engages with the third disk (40) so as to drive the latter in translation.

3. The cartridge as claimed in claim 2, **characterized in that** the nut (60) comprises a body (62) with an overall tubular shape which is centered on the axis (X-X), to which the prong or prongs (52) of the control lever (50) are assembled, and from which said extensions (66) extend, distributed over the outer periphery of this body.

4. The cartridge as claimed in one of claims 2 or 3, **characterized in that**, between the third disk (40) and the nut (60), a bearing (56) is placed which has a face made fixed and integral with the third disk, whilst its opposite face is in sliding contact against the nut, the end (53) of the or each prong (52) of the control lever (50) traversing this bearing from one side to the other, in a substantially complementary fashion.

5. The cartridge as claimed in any one of the preceding claims, **characterized in that** the assembly for displacing the thermostatic element (72) comprises a threaded bush (78) which is linked in rotation relative to the body (10), is screwed inside the nut (60), and against which the thermostatic element (72) or a rigid extension (76) thereof bears, preferably with the interposition of an excessive travel spring (80).

6. The cartridge as claimed in claim 5, **characterized in that** the threaded sleeve (78) is linked in rotation relative to the body (10) via the first disk (20').

7. The cartridge as claimed in any one of claims 5 or 6, **characterized in that** the thermostatic element (72) or the rigid extension (76) thereof is centered on the axis (X-X) and traverses, from one side to the other, at the same time the first disk (20; 20') via a substantially complementary orifice (23; 23') delimited through this first disk, the second disk (30) via a substantially complementary orifice (33) delimited through this second disk, and the third disk (40) via an oblong orifice delimited through this third disk, this oblong orifice having, in a section transverse to the axis, a smallest dimension which is matched to the corresponding dimension of the thermostatic element or of the rigid extension thereof, whilst its largest dimension is oriented in the direction of translational movement (T) of the third disk.

8. The cartridge as claimed in any one of the preceding claims, **characterized in that** the body (10), the first disk (20; 20') and the second disk (30) have substantially the same external diameter which is substantially equal to the internal diameter of an accommodating casing (2, 4) and which is, in particular, approximately 40 mm.

9. The cartridge as claimed in any one of the preceding claims, **characterized in that** the cold fluid inlet (31A) and hot water inlet (31B) of the second disk (30) have, in a section transverse to the axis (X-X), the overall shape of an isosceles triangle with its main vertex (S₁) pointing away from the axis.

10. A mixer faucet having a single-control thermostatic cartridge as claimed in any one of the preceding claims.
